(19)

**Europäisches Patentamt**

**European Patent Office**

**Office européen des brevets**

(11)  **EP 4 575 222 A1**

(12) **EUROPEAN PATENT APPLICATION**

(43) Date of publication:
**25.06.2025 Bulletin 2025/26**

(21) Application number: **23218021.6**

(22) Date of filing: **19.12.2023**

(51) International Patent Classification (IPC):
**F03D 17/00** (2016.01)

(52) Cooperative Patent Classification (CPC):
**F03D 17/011; F03D 17/006; F05B 2260/821;**
F05B 2260/84; F05B 2270/332

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicants:
• **Nordex Energy SE & Co. KG**
  **22419 Hamburg (DE)**
• **Fraunhofer-Gesellschaft zur Förderung
  der angewandten Forschung e.V.**
  **80686 München (DE)**

(72) Inventors:
• **Laborenz, Jacob**
  **22419 Hamburg (DE)**
• **Schwarte, Jörg**
  **22419 Hamburg (DE)**
• **Kretschmer, Phillip**
  **80686 München (DE)**
• **Fischer, Boris**
  **80686 München (DE)**

(74) Representative: **Völkl Siebenson Patentanwälte -
Partnerschaft mbB
Baaderstraße 13
80469 München (DE)**

(54) **METHOD FOR DETERMINING DAMAGE-RELATED INFORMATION OF A TECHNICAL SYSTEM, METHOD FOR OPERATING A TECHNICAL SYSTEM AND METHOD FOR CONSTRUCTING A TECHNICAL SYSTEM**

(57)     The method for determining damage-related information of a technical system (100) comprises a step of providing first information (11) being representative of estimated damages ($d\_est,i$) to a component (20) of the technical system in different time spans (i) during operation of the technical system, wherein the estimated damages are determined with the help of a damage estimator (DE). The first information is also representative of operating points ($o\_i$) of the technical system during the time spans. The method further comprises a step of determining second information (12) depending on the first information, wherein the second information is determined using a stochastic model which treats the accumulated damage (Y) of the component accumulated over several time spans as a stochastic variable with the realization of the estimated damages at the end of each time span and the realization of the operating points during each time span as a condition. The second information is representative of an expectation value (E(Y)) of this accumulated damage and/or an uncertainty (σ(Y)) of this accumulated damage.

Fig. 7

**EP 4 575 222 A1**

**Description**

The present disclosure relates to a method for determining damage-related information of a technical system. Furthermore, the present disclosure relates to a method for operating a technical system and a method for constructing a technical system. Moreover, the present disclosure relates to a computer program, a computer-readable data carrier, a computing device and a technical system.

The reconstruction of load experienced by the components of a technical system and the prediction of the remaining useful lifetime (RUL) is an important topic for the operation as well as the construction of such a technical system. The reconstruction can be done with different algorithms, including black boxes and white boxes. Typical fields of application concern technical systems with increased safety requirements or complex capital goods, like airplanes, nuclear power plants, production plants, machine tools, wind turbines etc.

Nowadays damage estimators (also called load estimators) are often used to reconstruct the experienced damage of a component of the technical system. Damage estimators detect mechanical loads as "virtual sensors" without instrumentation efforts and deliver, as an output, the damage equivalent load (DEL) for a certain time span. Advantages of load estimators compared to direct load measurements (e.g. by means of strain gauges) are that no instrumentation expenses are needed, the maintenance costs are significantly lower and data are available during the entire life cycle.

One object to be achieved is to provide an improved method for determining damage-related information of a technical system, particularly a method with which the accumulated damage to a component of the technical system can be determined more precisely and/or a method with which the uncertainty of the estimated accumulated damage can be reliably determined. Further objects to be achieved are to provide a method for operating a technical system and a method for constructing a technical system by using the information obtained with the method for determining the damage-related information. Other objects to be achieved are to provide a computer program, a computer readable data-carrier, a computing device and a technical system with which these methods can be executed.

Firstly, the method for determining damage-related information of a technical system is specified.

According to an embodiment, the method for determining damage-related information of a technical system comprises a step of providing first information being representative of estimated damages to a component of the technical system in different time spans during operation of the technical system, wherein the estimated damages are determined with the help of a damage estimator. The first information is also representative of operating points of the technical system during the time spans. The method further comprises a step of determining second information depending on the first information, wherein the second information is determined using a stochastic model which treats the accumulated damage of the component accumulated over several time spans as a stochastic variable with the realization of the estimated damages at the end of each time span and the realization of the operating points during each time span as a condition. The second information is representative of an expectation value of this accumulated damage and/or an uncertainty of this accumulated damage.

The present invention is, inter alia, based on the recognition that, depending on the fidelity of the damage estimator, it may under- or overestimate the damage compared to the true damage. For example, a damage estimator for a wind turbine may underestimate the damage at low wind speeds and overestimate the damage at high wind speeds. Besides this, measurement errors of the estimator input signals, for example of the tower top acceleration, may lead to errors in the damage estimated with the damage estimator for a certain time span. For example, for predicting the RUL, the accumulated damage over the whole operation time, i.e. the damages summed up over all time spans, needs to be determined.

In this invention, the accumulated damage is, instead, treated as a stochastic variable, also called "random variable", aiming to find the long-term expectation value of the damage in order to compensate for systematic estimation errors. It has turned out that with this method a more precise estimation of the accumulated damage and a more precise estimation of the uncertainty of the estimated accumulated damage is achieved. This is not only important for predicting the RUL of a technical system, but also for improving the design/construction phase for a technical system.

The method specified herein is, in particular, a computer implemented method, i.e. is performed by a computer or a processor.

Herein, when information is representative of a certain quantity or certain quantities, this means that the quantity or quantities can be extracted from the information directly or the quantity/quantities can at least be derived from the information. In other words, the quantity/quantities is/are stored in the information, or at least data are stored in the information, from which the quantity/quantities can be derived or determined or calculated, respectively. Furthermore, here and in the following, information is, in particular, electronic information, like electronic data.

Here and in the following, indices "$\mu$" when used outside of formulas may be written as "_$\mu$" for better readability.

The damage estimator provides, for each time span i, at least one estimated damage, also called "d_est,i". Particularly, d_est,i is the damage of the component at the end of the time span i. Each time span is, for example, between 1 min and 1 h, e.g. 10 min.

The component of the technical system, for which an estimated damage is provided, may be any technical

2

component of the technical system which experiences fatigue damage during operation. It may be a purely mechanical and/or electronic component of the technical system. In the case of the technical system being a wind turbine, the component may be the tower or a blade or the yaw system or the pitch system etc.

A basic assumption of the stochastic model is that, for each time span, there is the unknown actual damage of the component. In the stochastic model, this unknown actual damage is modeled as a random variable or a stochastically distributed variable, also called "D_i", respectively. The realization d_i of D_i at the end of time span i cannot be determined. Instead, a probability density function for D_i, also called "pdf(D_i)", may be investigated.

The estimated damage for the time span i is also assumed to be a random variable, also called "D_est", in the stochastic model. At the end of each time span i, however, the realization d_est,i of D_est,i is observed with the damage estimator. In the stochastic model, the pdf(D_i) can then be refined using the realization d_est,i of D_est,i as stored in the first information as a condition so that the pdf(Di) becomes a conditional probability density function.

A further parameter which influences the actual damage of the component is the operating point during time span i. The operating points, herein also called "o_i", are, in particular, quantities characterizing the quasi-static state of the technical system during each time span. The operating points are, particularly, selected such that, for a given operating point, the actual damage and the estimated damage of the damage estimator are statistically in a fixed ratio.

In the case of the technical system being or comprising a wind turbine, the operating points may be the wind speeds averaged for each time span. Alternatively, it could also be the averaged thrust acting on the wind turbine, the controller mode, the operating mode etc.

The operating point is actually also an unknown, i.e. a random or stochastically distributed variable, also called "O_i". It is, however, assumed that the operating points can be determined with sufficient accuracy and fidelity so that the operating points are not treated as random variables but the realization o_i of O_i as stored in the first information is used as a condition in the model instead.

Thus, "realization of a certain variable as a condition" herein means that a variable is not treated as a random variable but, instead, a concrete value is used. This concrete value may be determined with the help of measurements or with the help of simulations, for example. Here and in the following, when talking about the estimated damage or the operating point, the concrete values from the first information, i.e. d_est,i and o_i are meant. Otherwise, if the corresponding random variables D_est,i or O_i are meant instead, this will be explicitly mentioned.

With the realization of the operation points, i.e. the concrete values o_i, and the realization of the estimated damages, i.e. the concrete values d_est,i, as a condition, the accumulated damage is actually a conditional probability density function having a conditional expectation value and a conditional standard deviation. However, for large time spans i, which is herein assumed to be fulfilled, the conditional standard deviation is considered to be negligible because of the law of large numbers. The conditional expectation value y of this conditional probability density function, i.e. of the accumulated damage, is:

$$y = y(\overrightarrow{d_{est}}, \vec{o}, \vec{p}) = E\left(\sum_i D_i | \overrightarrow{D_{est}} = \overrightarrow{d_{est}}, \vec{O} = \vec{o}, \vec{P} = \vec{p}\right) \qquad (1)$$

Here, for the ease of notation, $\overrightarrow{D_{est}} = (D_{est,1}, D_{est,2}, ...)$. The same is used for $\vec{O}$, $\overrightarrow{d_{est}}$, $\vec{o}$. $\vec{P}$ represents a collection of random uncertainty parameters, like measurement uncertainties, physical uncertainties, model uncertainties and/or statistical uncertainties. $\vec{p}$ is the realization of $\vec{P}$. The uncertainty parameters, called "$\vec{p}$" affect the performance of the damage estimator but are actually not exactly known. Therefore, it makes sense to use $\vec{P}$ instead, which transforms y of formula (1) to a stochastic or random variable Y.

$$Y = Y(\overrightarrow{d_{est}}, \vec{o}, \vec{P}) \qquad (2)$$

For example, the uncertainty parameters $\vec{P}$ or $\vec{p}$ are assumed to be time-independent (no index i).

In the stochastic model, the random variable Y of formula (2) may be used as the accumulated damage.

The second information may be representative of the expectation value of the accumulated damage. Particularly, determining the second information comprises determining the expectation value of the random variable Y of formula (2) by using the stochastic model.

Additionally or alternatively, the second information is representative of the uncertainty of the accumulated damage. That is, determining the second information may comprise determining this uncertainty by using the stochastic model. In particular, the second information is representative of the uncertainty of the random variable Y of formula (2). The uncertainty may be the standard deviation.

According to at least one embodiment, the stochastic model approximates the accumulated damage as the sum of the product of three multiplicative factors summed up over the time spans i.

According to at least one embodiment, the first multiplicative factor, also called " $X(\vec{P}, o_i)$ ", is an uncertainty factor. The first multiplicative factor is dependent on the operating point (o_i) of the technical system. Particularly, it represents the uncertainty induced by the uncertainty parameters ( $\vec{p}$ ). For example, the first multiplicative factor is determined with the help of simulations, particularly by performing simulations with varying uncertainty parameters.

According to at least one embodiment, the second multiplicative factor, also called "$m(o_i)$" depends only on the operating point (o_i) of the technical system and represents systematic bias of the damage estimator as a function of the operating point. The second multiplicative factor may be determined with the help of fitting. For example, it is determined using simulations for determining the real damage values (d_i) and the load estimator for determining the estimated damages (d_est,i).

According to at least one embodiment, the third multiplicative factor is the estimated damage (d_est,i), i.e. as obtained from the damage estimator or from the first information, respectively.

Formulas (1) and (2) may be written as follows:

$$ y = \sum_i X(\vec{p}, o_i) \cdot m(o_i) \cdot d_{est,i} \qquad (3) $$

$$ Y = \sum_i X(\vec{P}, o_i) \cdot m(o_i) \cdot d_{est,i} \qquad (4) $$

Formula (3) can be approximated as

$$ y \approx \sum_i \left( 1 + \sum_q \Delta X_q(p_q, o_i) \right) \cdot m(o_i) \cdot d_{est,i} \qquad (5) $$

The index q stands for the individual uncertainty parameters, called "p_q", of $\vec{p}$. This means that the assumption is made that the influence of all uncertainty parameters is a superposition of the influence of each individual uncertainty parameter. The functions $\Delta X_q(p_q, o_i)$ represent the influence of the individual uncertainty parameters. They are, for example, constructed in such a way that $\Delta X_q(0, o_i) = 0 \ \forall \ q, o_i$. $p_q = 0$ represents the default case.

According to at least one embodiment, at least one uncertainty parameter, i.e. one or more, affecting the performance of the damage estimator is assumed to be a random uncertainty parameter in the stochastic model. Particularly at least one p_q of $\vec{p}$ is treated as a random variable, i.e. P_q of $\vec{P}$ is used instead of p_q of $\vec{p}$. As mentioned above, since the realization $\vec{p}$ is actually not known, it makes sense to use the random uncertainty parameter(s) $\vec{P}$ instead.

According to at least one embodiment, the random uncertainty parameter is propagated through the stochastic model, particularly through formula (5) of the stochastic model.

The propagation of the random input variable through the model may be done using the so-called GUM method. The GUM method is described in *International Organization for Standardization. ISO/IEC Guide 98-3:2008: Uncertainty of measurement - Part 3: Guide to the expression of uncertainty in measurement (GUM:1995). 2008*, the content of which is hereby incorporated by reference.

According to at least one embodiment, for determining the expectation value of the accumulated damage and/or the uncertainty of the accumulated damage, the first multiplicative factor is linearized around the expectation value of the at least one random uncertainty parameter. Then, only the expectation value of the at least one random uncertainty parameter and/or the standard deviation of the random uncertainty parameter are propagated through the stochastic model.

Applying the forward propagation, e.g. using the GUM method to formula (5), and applying the linearization around the expectation value of the at least one random uncertainty parameter, the expectation value of the accumulate damage can be written as

$$E(Y) \approx \sum_i \left( 1 + \sum_q E\left(\Delta X_q(P_q, o_i)\right) \right) \cdot m(o_i) \cdot d_{est,i} \qquad (6)$$

The uncertainty, herein also called "σ(Y)", of the accumulated damage can then be expressed as

$$\sigma(Y) \approx \sqrt{\sum_q \left( \frac{\partial Y}{\partial p_q}\bigg|_{\vec{p}=E(\vec{P})} \cdot \sigma(P_q) \right)^2} \qquad (7)$$

which can be further rewritten as

$$\sigma(Y) \approx \sqrt{\sum_q \left( \sum_i \frac{\partial \Delta X_q}{\partial p_q}\bigg|_{p_q=E(P_q)} \cdot m(o_i) \cdot d_{est,i} \cdot \sigma(P_q) \right)^2} \qquad (8)$$

According to at least one embodiment, the stochastic model treats the uncertainty of the accumulated damage as the square root of a sum. The sum is summed over the random uncertainty parameters. Each summand of the sum is the square of a product of two multiplicative factors, namely a fourth and a fifth multiplicative factor. The fourth multiplicative factor, also called " $\frac{\partial Y}{\partial p_q}\bigg|_{\vec{p}=E(\vec{P})}$ ", represents the derivation of the accumulated damage derived after the random uncertainty parameter and evaluated at the expectation value of the random uncertainty parameter. In other words, the fourth multiplicative factor represents the sensitivity of the accumulated damage for small changes of the parameters $\vec{p}$ around their expectations values $E(\vec{P})$.

The fifth multiplicative factor, also called "σ($P_q$)", represents the standard deviation of the random input variable (P_q).

According to at least one embodiment, the fourth multiplicative factor depends on the second multiplicative factors and on the third multiplicative factors (see, for example, formula (8)).

According to at least one embodiment, the first multiplicative factor and the second multiplicative factor are determined depending on the operating points of the first information and with the help of a look-up table having stored therein reference first and second multiplicative factors for different operating points, also called " $X_{ref}(\vec{P}, o_i)$ " and "$m_{ref}(o_i)$". The reference multiplicative factor may be previously determined with the help of simulations. They are then stored in the look-up table. Particularly, reference values $E(\Delta X_{ref,q}(p_q, o_i)$ for $E(\Delta X_q(P_q, o_i))$ may be stored, e.g. in the look-up table. When applying the method to a real technical system and/or to new simulations, the operating points obtained during operation of the real technical system or obtained from the new simulations may then be used as an input to the look-up table so that first and second multiplicative factors, particularly the reference values $E(\Delta X_{ref,q}(p_q, o_i)$ are obtained.

Likewise, the reference factors $\frac{\partial \Delta X_q}{\partial p_q}\bigg|_{ref, p_q=E(P_q)}$ and $\sigma_{ref}(P_q)$ for $\frac{\partial \Delta X_q}{\partial p_q}\bigg|_{p_q=E(P_q)}$ and σ($P_q$) from formula (8) may be stored in a look-up table and may also have been determined using simulations.

According to at least one embodiment, the method further comprises a step of providing third information which is representative of at least one input value obtained during operation of the technical system. For example, the third information is determined depending on measurements. In the case of the technical system being or comprising a wind turbine, the at least one input value of the third information is, for example, the generator speed and/or the pitch angles and/or the thrust force and/or the nacelle acceleration. These values can indeed be measured during operation of the wind turbine. From these input values the damage estimator calculates, for example, the bending moment acting on the tower and, accordingly, determines the estimated damage of the tower.

According to at least one embodiment, the first information is determined depending on the third information by using the at least one input value as an input for the damage estimator.

According to at least one embodiment, the method comprises a step of determining fourth information depending on the second information. The fourth information is representative of the remaining lifetime of the component of the technical system and/or of the uncertainty with which the remaining lifetime is determined. Indeed, with the expectation value of the accumulated damage and/or the uncertainty of the accumulated damage, the remaining lifetime and/or the uncertainty of the determined remaining lifetime of the component can be determined. The uncertainty of the remaining lifetime is, for example, the confidence level of the remaining lifetime. The remaining lifetime may be proportional to $y\_max - E(Y)$, wherein Y-max is the maximum allowed damage to the component.

According to at least one embodiment, the technical system is or comprises a wind turbine. The component for which the damage estimator determines the estimated damage is, for example, the tower.

According to at least one embodiment, the operating points of the first information are the wind speeds during the different time spans.

Next, the method for operating a technical system is specified. The method comprises a step in which the method for determining damage-related information of the technical system is executed. In a further step, an output signal is determined and generated depending on the second information, wherein the output signal is configured to set the operation of the technical system and/or to cause a scheduling of maintenance of the technical system.

The output signal is, particularly, determined for the same technical system for which the method for determining damage-related information is executed.

For example, if the second information is representative of the expectation value of the accumulated damage to exceed a threshold value, the operation mode of the technical system may be changed or the technical system may turned off. For example, in the case of a wind turbine, the rotational velocity and/or the power output may be reduced. Also the wind sector management may be adapted.

Additionally or alternatively, the output signal may be configured to cause a scheduling, particularly a rescheduling of maintenance of the technical system. For example, the output signal causes a noticeable warning signal so that an operator schedules maintenance.

According to at least one embodiment, the third information is determined depending on measurements. The measurements may be taken during operation of the technical system. For example, in case of a wind turbine, the measurement of the power output and/or of the pitch angles and/or of the top tower acceleration may be used for determining the third information.

Next, the method for constructing a technical system is specified. This method comprises a step of executing the method for determining damage-related information of a technical system as specified herein. In a further step, a technical system is constructed depending on the second information.

The constructed technical system is, particularly, a different technical system for which the method for determining damage-related information is executed.

As an example, the method for determining damage-related information may be applied to a real technical system, e.g. a real wind turbine. A new technical system, e.g. a new wind turbine, may then be constructed depending on the second information. For example, the new technical system can be constructed less conservatively based on the second information.

Next the computer program, the computer-readable data carrier and the computing device are specified.

The computer program comprises instructions which, when the program is executed by a computer or a computing device, respectively, cause the computer/computing device to carry out any of the methods described herein.

The computer-readable data carrier has the computer program stored thereon.

The computing device is configured to perform the methods according to any one of the embodiments described herein. For example, the computing device comprises at least one processor and/or at least one programmable logic controller, plc for short. It may further comprise interfaces for receiving information/signals and/or for the output of information/signals.

Next, the technical system is specified. The technical system is, in particular, configured to perform any one of the methods described herein. Therefore, all features described for the method are also described for the technical system and vice versa.

According to an embodiment, the technical system comprises at least one measurement system configured to take measurements with the help of which at least one input value for a damage estimator is determinable during operation of the technical system. Furthermore, the technical system comprises the computing device specified herein. The computing device is signally connected or is signally connectable to the measurement system in order to receive the measurements of the measurement system.

Hereinafter, the method for determining damage-related information of a technical system, the method for operating a technical system and the method for constructing a technical system as well as the technical system will be explained in more detail with reference to drawings on the basis of exemplary embodiments. The accompanying figures are included to provide further understanding. In the figures, elements of the same structure and/or functionality may be referenced by the same reference signs. It is to be understood that the embodiments shown in the figures are illustrative representations and are not necessarily drawn to scale. In so far as elements or components correspond to one another in terms of their function in different figures, the description thereof is not repeated for each of the following figures. For the sake of clarity, elements might not appear with corresponding reference symbols in all figures.

Figure 1 shows an exemplary embodiment of the technical system,

Figure 2 shows a flowchart of an exemplary embodiment of the operation of a damage estimator,

Figure 3 shows a flowchart of exemplary embodiment of the method for determining damage-related information of a technical system,

Figure 4 shows a flowchart of an exemplary embodiment of the method for operating a technical system and of the method for constructing a technical system,

Figures 5 to 7 show diagrams useful for understanding the method for determining the damage-related information.

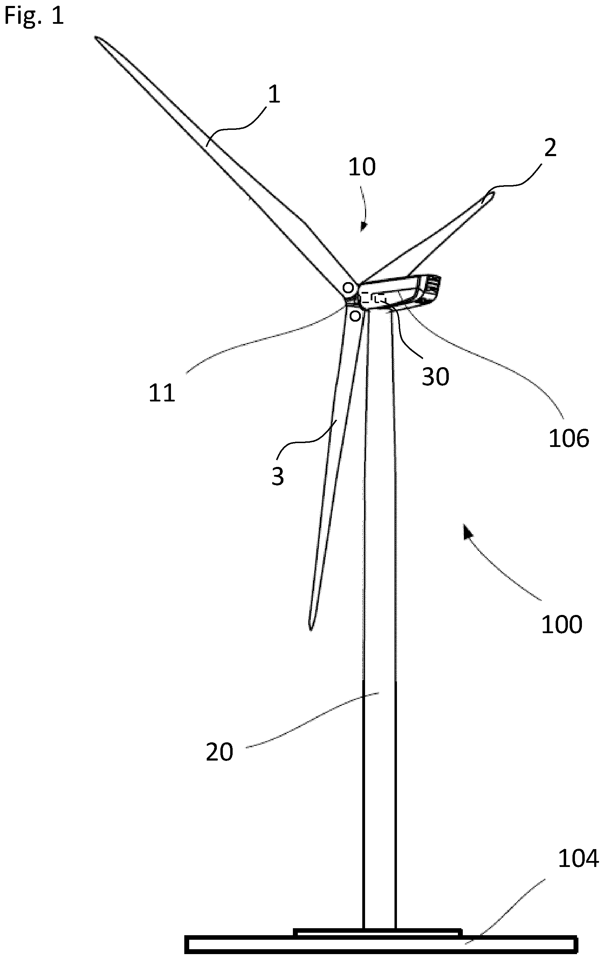

Figure 1 shows a schematic view of an exemplary embodiment of the technical system 100. Here, the technical system is a wind turbine 100 which comprises a tower 20. The tower 20 is fixed to the ground by means of a foundation 104. A nacelle 106 is rotatably mounted at one end of the tower 20, opposite to the ground. The nacelle 106 comprises, for example, a generator which is coupled to a rotor 10 via a gearbox (not shown). The rotor 10 comprises three (wind turbine) rotor blades 1, 2, 3, which are arranged on a rotor hub, said rotor hub being connected to a rotor shaft (not shown).

During operation, the rotor 10 is set in rotation by an air flow, for example wind. This rotational movement is transmitted to the generator via the drive train comprising, inter alia, the rotor shaft and the gearbox. The generator converts the mechanical energy of the rotor 10 into electrical energy. A plc 30 is used for controlling or operating the wind turbine 100.

The wind acting on the rotor and the thrust generated by the rotating rotor blades 1, 2, 3 induce load on the different components of the wind turbine 100. This results in (fatigue) damage of the components. In the following, the load and damage of the tower 20 are studied in greater detail.

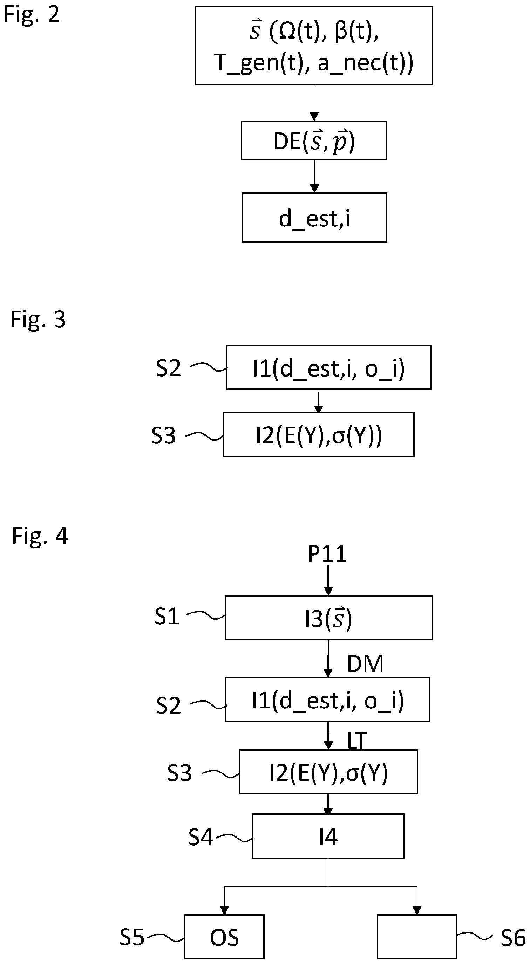

Due to the acting forces, the tower 20 is bent during operation. In order to determine the damage of the tower 20 induced by this bending, a damage estimator DE can be used. The operation of such a damage estimator DE is shown in figure 2.

For example, the damage estimator DE receives, as input values $\vec{S}$, the generator speed Q(t), the generator torque T_gen(t), the pitch angles β(t) of the rotor blades 1, 2, 3, and the forward-backward bending acceleration a_nec(t) of the nacelle 104. All of these input values $\vec{S}$ can be measured resolved for time t. For this purpose, the wind turbine 100 of figure 1 comprises a measurement system 11 with different sensors configured to measure the mentioned input values $\vec{S}$.

The damage estimator DE determines, from the input values $\vec{S}$, the time resolved forward-backward bending moment of the tower 20. From this bending moment, the damage estimator DE performs a static load calculation, e.g. according to IEC 61400-1. As a result, the damage estimator DE delivers estimated damages d_est,i for each time span i. The time spans i each have a length, for example, of 10 minutes.

The damage estimator DE also makes some assumptions about physical parameters, measurement uncertainties and so on. The input values are summarized as uncertainty parameters $\vec{p}$. They may be set as default values in the damage estimator.

It is important to understand that the damage estimator DE can be used with real input values $\vec{S}$, i.e. values which have been measured at a real wind turbine, but also with simulated input values $\vec{S}$, i.e. values which have been simulated using a simulation of the wind turbine. In each case, the damage estimator will provide estimated damages d_est,i. Simulations can also provide the actual damages d_i at the end of each time span i. This can be compared to the estimated damages d_est,i obtained with simulated input values $\vec{S}$, as will be discussed later.

An exemplary embodiment of the method for determining load related information of a technical system is shown in figure 3 with the help of a flowchart. In a step S2, first information I1 is provided. The first information I1 is representative of the estimated damages d_est,i to a component of the technical system in different time spans i during operation of the technical system. The estimated damages d_est,i are determined with the help of a damage estimator DE. The first information I1 is, furthermore, representative of the operating points o_i of the technical system 100 during the time spans i.

In a step S3, second information I2 is determined depending on the first information I1. The second information I2 is determined using a stochastic model which treats the accumulated damage Y of the component accumulated over several or all time spans i as a stochastic variable. Thereby, the realization of the estimated damages d_est,i at the end of each time span i and the realization of the operating points o_i during each time span i as extractable from the first information I1 is set as a condition. The second information I2 is representative of the expectation value E(Y) of this accumulated damage Y and/or of the uncertainty σ(Y) of this accumulated damage Y.

The estimated damages d_est,i could, for example, be the estimated damages obtained with the damage estimator DE described in connection with figure 2. The operating points o_i for each time span may be the wind velocities acting on the rotor 10 and averaged over the respective time span i.

The expectation value E(Y) of the accumulated damage Y and the uncertainty σ(Y) of the accumulated damage Y may be parametrized according to formulas (6) and (8). The uncertainty parameters $\vec{p}$ are thereby treated as random variables $\vec{P}$.

The second multiplicative factor $m(o_i)$ representing the systematic bias of the damage estimator DE is determined with the help of simulations. For example, $m(o_i)$ is calculated with a statistical evaluation such that

$$m(o_i) = E\left(\frac{D_i}{D_{est,i}}\;\middle|\; O_i = o_i, \vec{P} = 0\right) \qquad (9)$$

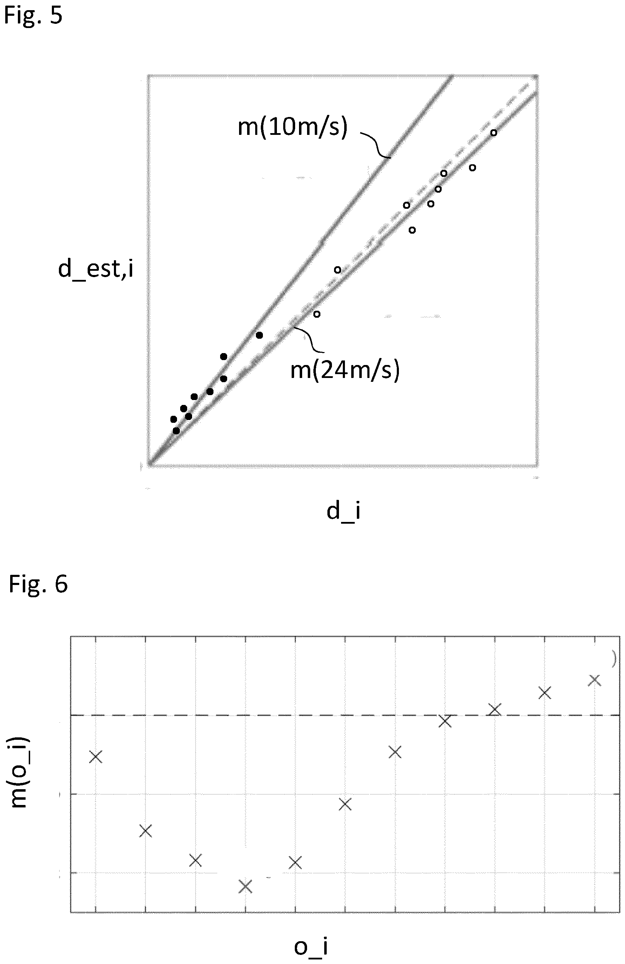

This means that simulations of the wind turbine 100 are performed so that actual damages d_i for different time spans i are obtained. Simulated input values $\vec{S}$ are used together with the damage estimator to obtain corresponding estimated damages d_est,i. The actual damages d_i and the estimated damages d_est are classified for the operating points o_i. For example, the operating points o_i are binned into bins with a bin width of 2 m/s. Thus, for every operating point o_i (bin) values for d_est,i and d_i are obtained. The sample mean of sufficiently many di/d_est,i of each operating point approximates m(o_i) according to formula (9). In order to get m(o_i), d_est,i and d_i are obtained from simulations with default values of $\vec{p}$, namely $\vec{p}=0$. This is further illustrated in figures 5 and 6.

In figure 5, the full dots represents d_est,i and d_i for an operating point o_i being a wind speed of 10 m/s. A straight line with the slope of m(10m/s) is fitted through these points. The open dots represent d_est,i and d_i for an operating point being a wind speed of 24 m/s. Also here a straight line with the slope of m(24m/s) is fitted through these points. In this way, a value m(o_i) can be obtained for all operating points o_i. This is illustrated in figure 6, showing the values m(o_i) for different operating points o_i.

The simulations reveal that the damage estimator systematically overestimates the damage at low wind speeds (low values of o_i) and systematically underestimates the damage at high wind speeds (high values of o_i).

The functions $\Delta X_q(P_q, o_i)$ and $\left.\frac{\partial \Delta X_q}{\partial p_q}\right|_{p_q = E(P_q)}$ of formulas (6) and (8) are also determined with the help of the simulations of the wind turbine. The random uncertainty parameters $\vec{P}$ can be divided into different groups. For example, they are divided into $\vec{P} = (\vec{P}_{meas}, \vec{P}_{phys}, \vec{P}_{mod}, \vec{P}_{stat})$, wherein

- Measurement uncertainty parameters are listed in $\vec{P}_{meas}$,

- Physical uncertainty parameters are listed in $\vec{P}_{phys}$,

- Model uncertainty parameters are listed in $\vec{P}_{mod}$.

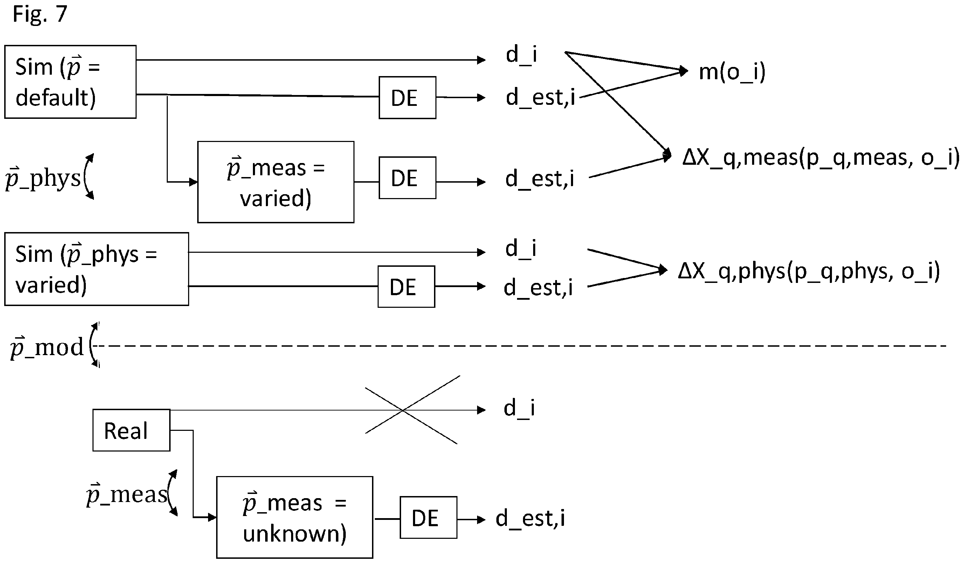

The sources of these uncertainty parameters can be understood with the help of figure 7. Simulations of the wind turbine are illustrated above the dashed line. A real wind turbine is illustrated below the dashed line.

The actual damage d_i of the tower 20 of a real wind turbine cannot be determined, which is why the arrow to d_i is crossed out. But, for a real wind turbine, the damage estimator DE can be used. An uncertainty which enters into the damage estimator DE in this case is the measurement uncertainty $\vec{p}_{meas}$. Indeed, the measurements of Q(t), T_gen(t),

$\beta(t)$ and a_nec(t), underlie a measurement uncertainty $\vec{p}_{meas}$, which are, for example, instrument errors like offset errors, gain errors, nonlinearity errors and other errors of all the input signals of the damage estimator DE. Since these measurement uncertainties $\vec{p}_{meas}$ are not known, it makes sense to treat them as random uncertainty parameters $\vec{P}_{meas}$. The influence of those uncertainty parameters can be simulated by adding artificial measurement errors to the simulations, as depicted by the box "$\vec{p}\_\texttt{meas} = \texttt{varied}$" in figure 7.

Physical uncertainty comes from the fact that, in the simulation, default values are usually used for physical parameters. In reality, those physical parameters show unknown variations from the default values used in the simulations. Therefore, it again makes sense to use $\vec{P}_{phys}$ instead of $\vec{p}_{phys}$. The physical uncertainties include, for example, wind turbine specific properties such as material constants and/or environmental parameters such as the distribution parameters of turbulence intensity. Their influence can be investigated by simulating wind turbines with parameters $\vec{P}_{phys}$ that deviate from their default values. This is depicted by the box "Sim ( $\vec{p}\_\texttt{phys} = \texttt{varied}$ )" in figure 7.

Model uncertainties have to do with the simulation method. The equations used to model the real world are not perfect and numerical errors also occur. Model uncertainty is depicted in figure 7 by the arrow on the left-hand side labeled "$\vec{p}\_\texttt{mod}$". Parametrizing this uncertainty with $\vec{p}_{mod}$ is purely theoretical. This uncertainty is neglected in the presented method.

The first multiplicative factor can now be determined. For this purpose, the two functions $\Delta X_q(P_q, o_i)$ and $\left.\dfrac{\partial \Delta X_q}{\partial p_{q,}}\right|_{p_q = E(P_q)}$ are rewritten as:

$$E\left(\Delta X_q\big(P_q, o_i\big)\right) \approx \Delta X_q\big(E(P_q), o_i\big)$$

$$\approx E\left(\left.\frac{D_i}{D_{est,i}}\right| O_i = o_i, \vec{P} = \big(0, \dots, 0, E(P_q), 0, \dots 0\big)\right) \cdot \frac{1}{m(o_i)} - 1 \qquad (10)$$

$$\left.\frac{\partial \Delta X_q(p_{q,}, o_i)}{\partial p_{q,}}\right|_{p_q = E(P_q)} \approx \frac{\Delta X_q\big(E(P_q) + \sigma(P_q, o_i)\big) - \Delta X_q\big(E(P_q) - \sigma(P_q, o_i)\big)}{2\sigma(P_q)} \qquad (11)$$

Also here, sample means of simulated data points d_i/d_est,i can be used to approximate the expectation value E(D_i/D_est,i). However, for those data points, simulations with "detuned values" for $\vec{p}$, according to formulas (10) and (*11*), need to be conducted.

---

1. Measurement uncertainty parameters $\vec{p}\_\texttt{meas}$

The measurement uncertainty parameters are not an input for the simulation itself but only for the damage estimator DE. Artificial measurement errors are imposed on the input values of the damage estimator so that, for each of the uncertainty values $p_q = E(P_q)$, $p_q = E(P_q + \sigma(P_q))$ and $p_q = E(P_q - \sigma(P_q))$, a set of estimated damages d_est,i is obtained. This is again classified for the operating points o_i, as it is done for determining m(o_i). Then, using formulas (10) and (11), values $E(\Delta X_q(P_q, o_i))$ and $\left.\dfrac{\partial \Delta X_q}{\partial p_{q,}}\right|_{p_q = E(P_q)}$ for each pair (q,meas, o_i) are obtained.

---

2. Physical uncertainty parameters $\vec{p}\_\texttt{meas}$

Since the physical uncertainty parameters are an input of the simulations, simulations have to be performed with the physical uncertainty parameters $p_q = E(P_q)$, $p_q = E(P_q + \sigma(P_q))$ and $p_q = E(P_q - \sigma(P_q))$ for each index phys, q. Thus, for each index phys,q, values for d_est,i and d_i are obtained and are then classified for the operating points o_i. Then, for each pair (phys,q, o_i), values $E(\Delta X_q(P_q, o_i))$ and $\left.\dfrac{\partial \Delta X_q}{\partial p_q,}\right|_{p_q = E(P_q)}$ are again obtained (see formulas (10) and (11)).

3. Actual simulation

The above-described calculations have been performed for a simulated wind turbine 100 and by studying the damage of the tower 20. From this, the standard approach to estimate the accumulated damage, i.e. adding up all estimated damages, and the approach described herein, i.e. the accumulated damage is treated as a stochastic variable, have been compared by calculating the ratio $\left.\sum_i d_{est,i}\middle/ E(Y)\right.$ using formula (6). The result was:

$$\left.\sum_i d_{est,i}\middle/ E(Y)\right. = 1.145 \qquad\qquad (12)$$

This means that the standard approach overestimates the accumulated damage by about 14.5 %.

Moreover, $\left.\sigma(Y)\middle/ E(Y)\right.$ has been determined using formulas (6) and (8) with the result:

$$\left.\sigma(Y)\middle/ E(Y)\right. = 0.107 \qquad\qquad (13)$$

That means that the uncertainty of the estimation is about 11% of the expectation value.

The values for $E(\Delta X_q(P_q, o_i))$, $m(o_i)$ of formula (6) and $\left.\dfrac{\partial \Delta X_q}{\partial p_q}\right|_{p_q = E(P_q)}$ of formula (8) for each operating point o_i can be stored as reference values $E(\Delta X_{ref,q}(P_q, o_i))$, $m_{ref}(o_i)$ and $\left.\dfrac{\partial \Delta X_q}{\partial p_q}\right|_{ref, p_q = E(P_q)}$ in a look-up table LT. In this way, the results from the simulation can (later) be used to apply the method to a real wind turbine. This will be explained now in connection with figure 4.

In figure 4, measurements P11 are taken with the help of the measurement system 11. Input values $\vec{S}$ for the damage estimator DE are determined from these measurements P11. The third information I3, provided in step S1, is representative of these input values $\vec{S}$.

Then, in step S2, the first information I1 is determined depending on the third information I3 using the damage estimator DE. The second information I2 is determined depending on the first information I1. All values which are not accessible when using real data of a real wind turbine, like $E(\Delta X_q(p_q, o_i))$, $m(o_i)$ and $\left.\dfrac{\partial \Delta X_q}{\partial p_q}\right|_{p_q = E(P_q)}$ for each operating point o_i can be extracted from the look-up table LT filled with the reference values. In this way, the expectation value E(Y) and the uncertainty $\sigma(Y)$ can also be determined for the real wind turbine. These values are stored in the second information I2.

In step S4, fourth information I4 is determined depending on the second information I2. The fourth information I4 is representative of the remaining lifetime of the wind turbine 100 or the tower 20, respectively.

In step S5, an output signal OS is generated depending on the second information I2 or the fourth information I4, respectively. The output signal OS is configured to set the operation of the wind turbine 100 and/or to cause scheduling of maintenance of the wind turbine. For example, the output signal OS causes a change of operation, like a reduction of the power output and/or a reduction of power extraction. The output signal OS may indicate the remaining lifetime to an operator so that he/she can schedule maintenance of the wind turbine.

Additionally or alternatively to step S5, a step S6 can be executed in which a new wind turbine 100 is constructed

EP 4 575 222 A1

or designed, respectively, depending on the second I2 or fourth information I4, respectively.

The invention described herein is not limited by the description in conjunction with the exemplary embodiments. Rather, the invention comprises any new feature as well as any combination of features, particularly including any combination of features in the patent claims, even if said feature or said combination per se is not explicitly stated in the patent claims or exemplary embodiments.

Reference signs

| | |
|---|---|
| 1 | first rotor blade |
| 2 | second rotor blade |
| 3 | third rotor blade |
| 10 | rotor |
| 20 | component/tower |
| 11 | measurement system |
| 30 | computing device |
| 100 | wind turbine |
| 104 | foundation |
| 106 | nacelle |

| | |
|---|---|
| I1 | first information |
| I2 | second information |
| I3 | third information |
| I4 | fourth information |
| OS | output signal |

| | |
|---|---|
| P11 | measurements |
| $\vec{s}$ | input value |
| Q(t) | generator speed |
| T_gen(t) | generator torque |
| β (1) | pitch angle |
| a_nec(t | forward-backward bending acceleration |
| $\vec{p}$ ,p_q | uncertainty parameter |
| E(P_q) | expectation value of random uncertainty parameter |

| | |
|---|---|
| DE | damage estimator |
| d_est,i | estimated damage |
| o_i | operating point |
| i | time span |
| Y | accumulated damage |
| E(Y) | expectation value of accumulate damage |
| σ(Y) | uncertainty of accumulated damage |
| $m(o_i)$ | second multiplicative factor |
| LT | look-up table |

| | |
|---|---|
| S1 to S5 | method steps |

**Claims**

1. Method for determining damage-related information of a technical system (100), the method comprising

- (S2) providing first information (I1) being representative of

- estimated damages (d_est,i) to a component (20) of the technical system (100) in different time spans (i) during operation of the technical system (100), wherein the estimated damages (d_est,i) are determined with the help of a damage estimator (DE), and
- operating points (o_i) of the technical system (100) during the time spans (i),

- (S3) determining second information (I2) depending on the first information (I1), wherein

- the second information (I2) is determined using a stochastic model which treats the accumulated damage (Y) of the component (20) accumulated over several time spans (i) as a stochastic variable with the realization of the estimated damages (d_est,i) at the end of each time span (i) and the realization of the operating points (o_i) during each time span (i) as a condition, and
- the second information (I2) is representative of an expectation value (E(Y)) of this accumulated damage (Y) and/or of an uncertainty (σ(Y)) of this accumulated damage (Y).

2. Method according to claim 1, wherein

- the stochastic model approximates the accumulated damage (Y) as a sum of the product of three multiplicative factors summed up over the time spans (i), wherein

- the first multiplicative factor is an uncertainty factor and is dependent on the operating point (o_i) of the technical system (100),
- the second multiplicative factor ($m(o_i)$) depends only on the operating point (o_i) of the technical system (100) and represents systematic bias of the damage estimator (DE) as a function of the operating point (o_i),
- the third multiplicative factor is the estimated damage (d_est,i).

3. Method according to claim 1 or 2, wherein

- at least one uncertainty parameter ( $\vec{p}$ ) which affects the performance of the damage estimator (DE) is assumed as a random uncertainty parameter in the stochastic model,
- the random uncertainty parameter is propagated through the stochastic model.

4. Method according to claims 2 and 3, wherein

- for determining the expectation value (E(Y)) of the accumulated damage (Y) and/or the uncertainty (σ(Y)) of the accumulated damage (Y), the first multiplicative factor is linearized around the expectation value (E(P_q)) of the at least one random uncertainty parameter (P_q),
- the expectation value (E(P_q)) and/or the standard deviation (o(P_q)) of the at least one random uncertainty parameter (P_q) are propagated through the stochastic model.

5. Method according to claim 2, wherein

- the first multiplicative factor and the second multiplicative factor ($m(o_i)$) are determined depending on the operating points (o_i) and with the help of a look-up table (LT) having stored therein reference first and second ($m_{ref}(o_i)$) multiplicative factors for different operating points (o_i).

6. Method according to any one of the preceding claims, further comprising

- providing third information (I3) which is representative of at least one input value ( $\vec{s}$ ) obtained during operation of the technical system (100), wherein
- the first information (I1) is determined depending on the third information (I3) by using the at least one input value ( $\vec{s}$ ) as an input for the damage estimator (DE).

7. Method according to any one of the preceding claims, further comprising

- determining fourth information (I4) depending on the second information (I2), wherein
- the fourth information (I4) is representative of the remaining lifetime of the component (20) of the technical system (100) and/or of the uncertainty with which the remaining lifetime is determined.

8. Method according to any one of the preceding claims, wherein

   - the technical system (100) is or comprises a wind turbine, and/or
   - the operating points (o_i) are the wind speeds during the different time spans (i).

9. Method for operating a technical system (100) comprising

   - executing the method for determining damage-related information of the technical system (100) according to any one of claims 1 to 8,
   - (S5) determining and generating an output signal (OS) depending on the second information (I2), wherein the output signal (OS) is configured to set the operation of the technical system (100) and/or to cause a scheduling of maintenance of the technical system (100).

10. Method for operating a technical system (100) according to claim 9, wherein

    - the method for determining damage-related information is the method according to claim 6 or any one of claims 6 to 8 in their dependency on claim 6,
    - the third information (I3) is determined depending on measurements (P11) taken during operation of the technical system (100).

11. Method for constructing a technical system (100) comprising,

    - executing the method for determining damage-related information of a technical system (100) according to any one of claims 1 to 8,
    - (S6) constructing a technical system (100) depending on the second information (I2).

12. Computer program comprising instructions which, when the program is executed by a computer, cause the computer to carry out the methods of any one of claims 1 to 11.

13. Computer-readable data carrier having the computer program of claim 12 stored thereon.

14. Computing device (30) configured to perform the methods of any one of claims 1 to 11.

15. Technical system (100) comprising

    - at least one measurement system (11) configured to take measurements with the help of which at least one input value ( $\dot{\vec{S}}$ ) for a damage estimator (DE) is determinable during operation of the technical system (100),
    - at least one computing device (30) according to claim 14, wherein
    - the computing device (30) is signally connected or signally connectable to the measurement system (11) in order to receive the measurements (P11) of the measurement system (11) .

Fig. 1

Fig. 2

$$\vec{s}\ (\Omega(t),\ \beta(t),$$
$$T\_gen(t),\ a\_nec(t))$$

$$DE(\vec{s}, \vec{p})$$

$$d\_est,i$$

Fig. 3

S2 — $I1(d\_est,i,\ o\_i)$

S3 — $I2(E(Y), \sigma(Y))$

Fig. 4

P11

S1 — $I3(\vec{s})$

DM

S2 — $I1(d\_est,i,\ o\_i)$

LT

S3 — $I2(E(Y), \sigma(Y)$

S4 — $I4$

S5 — OS          S6

Fig. 5

Fig. 6

Fig. 7

Europäisches
Patentamt

European
Patent Office

Office européen
des brevets

# EUROPEAN SEARCH REPORT

**Application Number**

EP 23 21 8021

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2021/123416 A1 (VESTERGAARD JAKOB [DK] ET AL) 29 April 2021 (2021-04-29) | 1,3,6-15 | INV.<br>F03D17/00 |
| A | * figures 2, 5 *<br>* paragraphs [0005], [0020] - [0022], [0053], [0054], [0075] * | 2,4,5 | |
| | - - - - - | | |
| Y | US 2019/178231 A1 (TOMAS SANTIAGO [ES] ET AL) 13 June 2019 (2019-06-13)<br>* paragraph [0075] * | 1,3,6-15 | |
| | - - - - - | | |

**TECHNICAL FIELDS SEARCHED (IPC)**

F03D

The present search report has been drawn up for all claims

| Place of search | Date of completion of the search | Examiner |
|---|---|---|
| The Hague | 17 May 2024 | Altmann, Thomas |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.......................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 21 8021

This annex lists the patent family members relating to the patent documents cited in  the above-mentioned European search report.
The members are as contained in the European Patent Office EDP file on
The European Patent Office is in no way liable for these particulars which are merely given for the purpose of information.

17-05-2024

| Patent document cited in search report | Publication date | Patent family member(s) | | Publication date |
|---|---|---|---|---|
| US 2021123416 A1 | 29-04-2021 | CN | 112219028 A | 12-01-2021 |
| | | EP | 3791060 A1 | 17-03-2021 |
| | | ES | 2966993 T3 | 25-04-2024 |
| | | US | 2021123416 A1 | 29-04-2021 |
| | | WO | 2019214785 A1 | 14-11-2019 |
| US 2019178231 A1 | 13-06-2019 | BR | 102018075814 A2 | 16-07-2019 |
| | | CN | 110017249 A | 16-07-2019 |
| | | DK | 3499022 T3 | 06-06-2023 |
| | | EP | 3499022 A1 | 19-06-2019 |
| | | ES | 2946538 T3 | 20-07-2023 |
| | | US | 2019178231 A1 | 13-06-2019 |

EPO FORM P0459

For more details about this annex : see Official Journal of the European Patent Office, No. 12/82